# EUROPÄISCHE PATENTANMELDUNG

(11) **EP 2 027 951 A1**
(43) Veröffentlichungstag der Anmeldung: **25.02.2009**
(21) Anmeldenummer: 07016625.1
(22) Anmeldetag: 23.08.2007
(51) Int. Cl.: B21D 39/06, F16B 17/00, B21K 25/00, B23P 11/00

(54) **Verfahren zum drehfesten Verbinden eines metallischen Rohres mit einem Blech sowie drehfeste Verbindung eines metallischen Rohres mit einem Blech**

(71) Anmelder: WAFIOS Aktiengesellschaft, 72764 Reutlingen (DE)
(72) Erfinder: Hammerer, Peter, 87541 Bad Hindelang (DE)
(74) Vertreter: Geyer, Fehners & Partner

(57) **Zusammenfassung**

Bei einem Verfahren zum drehfesten Verbinden eines metallischen Rohres (2) mit einem Blech (1) wird am Rohr (2) einstückig ein Stützbördel (7) angeformt und danach im Blech (1) eine Öffnung (3) zum Durchstecken des Rohres (2) ausgebildet, die größer als der Rohrdurchmesser (d) und kleiner als der Durchmesser (D) des Stützbördels (7) ist. Hiernach wird mindestens eine radiale Aussparung (4) am Umfang der Öffnung (3) im Blech (1) angebracht und das Rohr (2) in die Öffnung (3) bis zum Anliegen des Stützbördels (7) gegen die Oberfläche (9) der ihm zugewandten Blechseite eingeschoben.

Hiernach wird ein umlaufender Verschlußbördel (11) einstückig am Rohr (2) auf der dem Stützbördel (7) gegenüberliegenden Seite des Bleches (1) derart angeformt, daß er an der Oberfläche (10) der ihm zugewandten Blechseite anliegt. Sodann wird nur an den Stellen, an denen eine radiale Aussparung (4) im Blech (1) am Umfang der Öffnung (3) vorgesehen ist, jeweils eine axial gerichtete Einprägung (13) an einem der beiden Bördel (7, 11) entsprechend Lage und Form der radialen Aussparung (4) unter gleichzeitigem Einfließen von Rohrwerkstoff zumindest teilweise in diese Aussparung (4) angebracht.

## Beschreibung

Die Erfindung bezieht sich auf ein Verfahren zum drehfesten Verbinden eines metallischen Rohres mit einem Blech, sowie ferner eine drehfeste Verbindung eines metallischen Rohres mit einem Blech, wobei das Rohr durch ein Öffnung im Blech hindurchläuft.

Es ist bekannt, ein Rohr mit einem Blech über Schweiß- oder Lötverfahren miteinander zu verbinden, wobei das Rohr entweder stumpf am Blech aufgeschweißt oder durch eine Bohrung im Blech hindurch gesteckt und dann verschweißt werden.

Diese Befestigungsarten sorgen zwar für eine Verbindung, bei der auch Drehmomente gut übertragen werden können, diese bekannten Befestigungsverfahren, ob Schweißen oder Löten, sind jedoch teuer und sehr zeitintensiv.

Es ist auch allgemein bekannt, ein Rohr mit einem einstückig bereits handgeformten Stützbördel in eine Bohrung eines Bleches einzusetzen, bei der am Umfang der Bohrung zahnförmig ausgebildete, radial verlaufende Zacken angebracht sind. Nach dem Einführen des Rohres bis zum Anbiegen des angeformten Stützbördels gegen die zugewandte Oberfläche des Bleches wird anschließend auf der gegenüberliegenden Seite des Bleches am Rohr ein weiterer Verschlußbördel angeformt und an diesem eine ringförmig umlaufende Einprägung angebracht, durch die der Rohrwerkstoff in die zahnförmigen Aussparungen an der Wand der Öffnung im Blech eingedrückt wird. Bei diesem bekannten Verfahren ist es jedoch erforderlich, daß für das Blech ein harter Werkstoff eingesetzt wird, damit die Zähne am Umfang der Öffnung beim Prägen nicht zerstört werden. Die Kombination der Werkstoffe für das Blech einerseits und Rohr andererseits kann nicht beliebig gewählt werden, da das Fließverhalten des Rohrmaterials sowie die Härte und Kantenbeschaffenheit des Blechs die Qualität der geschaffenen Verbindung maßgeblich beeinflussen. Die Größe des übertragbaren Drehmomentes kann dabei nicht einem bestimmten Einsatzfall angepaßt werden.

Aus der US 2006 0 236 521 A1 ist es bekannt, zwei Rohre über mindestens einen Bördel zu verbinden, wobei das eine (kleinere) Rohr in eine Öffnung des anderen (größeren) Rohres eingesteckt wird und so dann ein Bördel am eingesteckten Rohr erzeugt wird, und zwar an einer Stelle, an der der Bördel in einer Aussparung der Wandung des aufnehmenden Rohres aufgenommen ist, indem er diese Aussparung vollständig ausfüllt. Axial außen, also an der Stelle, an der das kleinere Rohr aus dem größeren herausläuft, kann noch ein zusätzlicher Verschlußbördel am Rohr angebracht werden, der gegen die dortige radiale Begrenzungsfläche des aufnehmenden Rohres anliegt und auch einen festen Sitz der Verbindung gewährleistet. Hierbei ist allerdings die Gestaltung der Aussparung in der Wandung des aufnehmenden Rohres schwierig und die Fähigkeit zum Übertragen von Drehmomenten wird durch diese Verbindung allein durch Reibschluß gewährleistet. Zudem muß die Wandung des aufnehmenden Rohres relativ dick sein.

Aus der US 6 035 516 A, der US 6 338 191 B1, der US 6 823 575 B2, sowie der US 20050035641 A1 ist eine Befestigung eines Führungsrohres für Kopfstützen an Autositzen bekannt, wobei das Rohr mit einem einstückig angeformten Bördel durch eine Öffnung einer Aufnahmeplatte hindurch gesteckt und anschließend auf der dem Bördel gegenüberliegenden Seite dieser Aufnahmeplatte an dem Rohr ein weiterer Bördel einstückig angeformt wird. Die beiden axial am Rohr zueinander versetzten Bördel umfassen mit Haltern das eingeschobene Rohr an der Aufnahmeplatte. Auch bei diesen Lösungen wird die Größe des Blechs durch die Verbindung übertragbaren Drehmomentes allein durch Reibschluß erzielt.

Aus DE 10 2005 010 007 A1 ist ein Verfahren zum Verbinden von Rahmen Komponenten mittels Magnetimpulsschweißen bekannt. Ein mit einer Bohrung versehenes Teil als erste Komponente weist einen Flansch auf, während die zweite Komponente, welche in die Bohrung eingesteckt wird, mit einer Aufweitung oder einer Einschnürung versehen ist. Durch das Magnetimpuls-Schweißverfahren wird der Flansch der ersten Komponente umgeformt und mit der Aufweitung bzw. Einschnürung der zweiten Komponente in Verbindung gebracht, sowie mit ihr verschweißt. Allerdings ist dieses bekannte Verfahren sehr aufwendig und auch hier kann nur ganz bedingt eine Übertragbarkeit der geschaffenen Verbindung für Drehmomente erreicht werden.

Ausgehend hiervon liegt der Erfindung nun die Aufgabe zugrunde, ein Verfahren zum drehfesten Verbinden eines metallischen Rohrs mit einem Blech vorzuschlagen, bei dem ganz unterschiedliche Werkstoffe und Werkstoffpaarungen zum Einsatz kommen können, ferner eine Zerstörung der Aussparungen auch im Falle hochfester Rohrwerkstoffe nicht eintritt und das Fließverhalten des Rohwerkstoffs kein beschränkender Faktor für die Verbindung ist. Zudem soll das Verfahren auch die Möglichkeit bieten, die zu schaffende Verbindung im Hinblick auf den vorgesehenen Einsatzfall hinsichtlich der Größe des übertragbaren Drehmomentes damit eine Anpassung an unterschiedliche Anforderungen erreichen zu können.

Erfindungsgemäß wird dies bei einem Verfahren zum drehfesten Verbinden eines metallischen Rohres mit einem Blech durch folgende Verfahrensschritte erreicht:
a) Einstückiges Anformen eines umlaufenden Stützbördels am Rohr;
b) Ausbilden einer Öffnung im Blech zum Durchstecken des Rohres, die größer als der Rohrdurchmessers und kleiner als der Außendurchmesser des Stützbördels ist;
c) Anbringen mindestens einer radialen Aussparung am Umfang der Öffnung im Blech;
d) Einschieben des Rohres in die Öffnung des Bleches bis zum Anliegen des Stützbördels gegen die Oberfläche der ihm zugewandten Blechseite;
e) Anformen eines umlaufenden Verschlußbördels einstückig am Rohr auf der dem Stützbördel gegenüberliegenden Seite des Bleches derart, daß dieser Verschlußbördel an der Oberfläche der ihm zugewandten Bleichseite anliegt;
f) Nur an Stellen, an denen eine radiale Aussparung im Blech am Umfang der Öffnung vorgesehen ist, Einbringen jeweils einer axial gerichteten Einprägung an mindestens einem der Bördel entsprechend der Lage und der Form dieser radialen Aussparung unter gleichzeitigem Einfließen von Rohrwerkstoff zumindest teilweise in diese Aussparung.

Bei dem erfindungsgemäßen Verfahren wird, anders als bei dem bekannten Verfahren, nicht eine an dem Verschlußbördel vollständig um die Öffnung herumlaufende Einprägung vorgesehen, durch die zwar auch Material in die darunterliegenden Aussparungen einfließt, die infolge ihres Umlaufs jedoch auch von oben auf die Bereiche des Blechs drückt, welche, in Umfangsrichtung gesehen, zwischen den einzelnen Aussparungen vorliegen, so daß, wenn nicht ausreichend Material für das Blech benutzt wird, diese Teile der Blechoberfläche unerwünscht durch den Druck der Einprägung ebenfalls verbogen sowie dadurch auch die Formen der Aussparungen zerstört werden. Vielmehr wird bei dem erfindungsgemäßen Verfahren jeweils nur an den Stellen, an denen eine radiale Aussparung im Blech vorliegt, über dieser auf dem über ihr liegenden Verschlußbördel in dem Bereich desselben, welcher der Form und Größe der darunter liegenden Aussparung entspricht, eine nur dieser Aussparung zugeordnete Einprägung (und zwar axial in Richtung auf die Aussparung hin) angebracht, so daß der auf das Material des Verschlußbördels wirkende Prägedruck ganz gezielt auch nur im Bereich der darunterliegenden Aussparung wirkt und zum Einfließen von Rohrwerkstoff in die Aussparung, und zwar zumindest teilweise in diese, führt.

Da am Verschlußbördel nur dort, wo am Umfang des darunter liegenden Bleches eine radiale Aussparung vorgesehen ist, eine Einprägung angebracht wird, nicht aber in den Bereichen, die außerhalb der Fläche der jeweiligen Aussparungen liegen, findet an letzteren auch kein Einprägevorgang statt. Damit werden diese Bereiche auch keiner axial wirksamen Prägekraft unterzogen, so daß beim erfindungsgemäßen Verfahren ganz speziell und gezielt das Rohrmaterial beim Einprägevorgang speziell nur an den angebrachten Aussparungen unter Druck gesetzt wird, kein Druck jedoch auf die in Umfangsrichtung zwischen den einzelnen Aussparungen liegenden Flächenbereiche des Bleches wirkt und diese damit auch nicht - anders als beim bekannten Verfahren - ihrerseits aufgebrochen, abgebogen oder sonstwie zerstört werden können.

Gerade die Abkehr von einer Einprägung am Verschlußbördel um dessen gesamten Umfang herum und stattdessen das gezielte Anbringen von individuellen Einprägungen, wobei jeder Aussparung eine solche Einprägung in Form und Lage zugeordnet wird, führt zu dem bei dem erfindungsgemäßen Verfahren letztlich erreichten Ergebnis, daß es nicht mehr beim Prägen zu einer Zerstörung der zwischen den einzelnen Aussparungen liegenden Bereiche des Bleches führt. Damit ist auch nicht mehr die Verwendung eines besonders harten Werkstoffes für das Blech erforderlich, sondern die Werkstoffkombination Blech/Rohr kann fast beliebig gewählt werden.

Die durch das erfindungsgemäße Verfahren herstellbare Verbindung zwischen dem Rohr und dem Blech führt zu einem hervorragenden Formschluß in Torsionsrichtung des Rohres, der im übrigen auch sehr gut reproduzierbar ist. Auch bei der Verwendung hochfester Rohrwerkstoffe tritt eine Zerstörung der Aussparungen (durch Zerstörung der zwischen ihnen in Umfangsrichtung liegenden Zwischenabschnitte des Bleches) nicht ein. Das Fließverhalten des Rohrwerkstoffes ist damit kein beschränkender Faktor mehr für die Herstellung einer torsionsfesten Verbindung.

Die Größe des Drehmomentes, das durch die mit dem erfindungsgemäßen Verfahren herstellbare Verbindung übertragen werden kann, kann über die Form, Anzahl und Größe der eingesetzten Aussparungen bzw. entsprechend über die Anzahl, Größe und Tiefe der Einprägungen an unterschiedliche Anforderungen beim Einsatz der Verbindung ganz individuell angepaßt werden. Die Qualität des Formschlusses der durch das erfindungsgemäße Verfahren hergestellten Verbindung wird hauptsächlich durch die Geometrie der eingesetzten Werkzeuge bestimmt, was zu der sehr guten Reproduzierbarkeit führt. Die Gefahr einer Verdrehung von Blech und Rohr wird damit funktionssicher verhindert. Dadurch, das das (meist hochfeste) Rohrmaterial bei dem erfindungsgemäßen Verfahren gezielt in die jeweils unter der Einprägung liegende Aussparung ("Tasche") beim Prägen eingedrückt wird, kann ohne weiteres ein weniger fester und einfacherer Blechwerkstoff eingesetzt werden.

Der Ablauf des erfindungsgemäßen Herstellungsverfahrens und damit auch die Qualität der hergestellten Verbindung ist erheblich besser steuerbar als bei herkömmlichen Verfahren bzw. Verbindungen.

Das erfindungsgemäße Verfahren ist auch für die Herstellung solcher Verbindungen einsetzbar, bei denen große Rohrwandstärken und hochfeste Rohre eingesetzt werden, da die mechanische Verzahnung zwischen Rohrmaterial (Stützbördel) und Blech auch hier sicher erreicht wird. Anders als bei den bekannten Verfahren, bei denen nur Rohrmaterial eingesetzt werden darf, das eine A-5 Dehnung größer als 25 % aufweist, die streng kontrolliert werden muß, weil bei ihrer Unterschreitung die Drehfestigkeit der Verbindung und deren Eignung zum Übertragen eines Drehmomentes einbricht, kann bei dem erfindungsgemäßen Verfahren ohne weiteres der Einsatz kostengünstigerer Rohre erfolgen.

In besonders vorteilhafter Ausgestaltung des erfindungsgemäßen Verfahrens werden mehrere radiale Aussparungen längs des Umfangs der Öffnung im Blech angebracht, wobei hier, ganz besonders bevorzugt, der Winkelabstand zwischen den beiden einander zugewandten Seitenflächen zweier benachbarter Aussparungen an den Stellen, an denen sie vom Umfang der Öffnung ablaufen, mindestens 10° beträgt. Hierdurch wird sichergestellt, das auch bei Ausbilden vieler radialer Aussparungen am Umfang der Öffnung im Blech der Winkelabstand zwischen den einander zugewandten Seitenflächen benachbarter Aussparungen eine ausreichende Größe aufweist, so daß beim Anbringen der individuellen Einprägungen am Verschlußbördel in Umfangsrichtung auch ein ausreichender Mindestabstand zwischen aufeinander folgenden Einprägungen vorliegt, damit nicht ganz verhinderbare Druckeinflüsse beim Prägevorgang seitlich der betreffenden Aussparung im Bereich zwischen zwei aufeinander folgenden Einprägungen infolge einer ausreichend großen Blech-Zwischenfläche zu keinen unerwünschten Deformationen dort führen.

Besonders bevorzugt werden vier bis sechs Aussparungen am Umfang der Öffnung angebracht.

Die Verteilung mehrerer radialer Aussparungen am Umfang der Öffnung im Blech kann in jeder gewünschten Anordnung vorgesehen werden, wie sie für einen speziellen Einsatzzweck sich möglicherweise als besonders geeignet erweist. Besonders bevorzugt ist für die meisten Einsatzfälle jedoch, wenn die radialen Aussparungen gleichmäßig um den Umfang der Öffnung herum verteilt angebracht werden.

Was die Form und Größe dieser radialen Aussparungen betrifft, so können auch hier alle geeigneten Formen und Größen eingesetzt werden, auch unterschiedliche Formen und unterschiedliche Größen um den Umfang einer Öffnung herum. Besonders bevorzugt ist es allerdings, wenn alle radiale Aussparungen in gleicher Form und Größe am Umfang einer Öffnung ausgebildet werden.

Die erforderlichen Einprägungen können ebenfalls in jeder geeigneten Art und Weise erzeugt werden, so z. B. durch Prägen, Hämmern oder dgl. Ganz besonders bevorzugt werden die Einprägungen jedoch durch Tiefziehen hergestellt.

Bei dem erfindungsgemäßen Verfahren werden die radialen Aussparungen jeweils vorteilhafterweise mit in Umfangrichtung seitlich begrenzenden Seitenflächen versehen, die in radialer Richtung verlaufen. Für bestimmte Ausführungsformen kann es aber auch günstig sein, die Seitenflächen der radialen Aussparungen nicht rein radial, sondern z. B. radial divergierend, schwalbenschwanzförmig, oder in anderer Form, auszuführen.

Bei dem erfindungsgemäßen Verfahren kann es für Fälle, bei denen die Übertragbarkeit besonders großer Torsionsmomente durch die Verbindung angestrebt wird, vorteilhaft sein, wenn der letzte Verfahrensschritt (Verfahrensschritt f) nicht nur an dem weiteren Stützbördel, sondern auch an dem ersten Stützbördel (der bereits beim Hindurchführen des Rohres durch die Öffnung im Blech am Rohr angebracht war) ausgeführt wird, so daß in diesem Fall Einprägungen an beiden Stützbördeln, und zwar jeweils spezifisch nur in den Bereichen des Stützbördels, die über einer entsprechenden Aussparung liegen, vorliegen. Für manche Einsatzfälle kann es auch vorteilhaft sein, an beiden Bördeln Einprägungen nicht an jeder Aussparung vorzusehen, sondern z. B. an einigen Aussparungen Einprägungen an einem Bördel, an anderen Einprägungen am anderen Bördel und am Rest der Aussparungen Einprägungen an beiden Bördeln anzubringen.

Die Erfindung bezieht sich ferner auf eine drehfeste Verbindung eines metallischen Rohres mit einem Blech, wie sie durch das erfindungsgemäße Verfahren hergestellt werden kann und bei der das Rohr durch eine Öffnung im Blech hindurchläuft, sowie mit einem ersten, einstückig am Rohr angeformten, umlaufenden Stützbördel, der gegen die Oberfläche einer Seite des Bleches anliegt, sowie mit einem einstückig am Rohr angeformten, umlaufenden Verschlußbördel, der gegen die Oberfläche auf der gegenüberliegenden Seite des Bleches anliegt.

Um eine drehfeste Verbindung eines metallischen Rohres mit einem Blech zur Verfügung zu stellen, bei der ganz unterschiedliche Werkstoffe und Werkstoffpaarungen zum Einsatz kommen können und die ein Übertragen besonders großer Drehmomente bei relativ einfacher Herstellbarkeit gestattet, wird bei der oben genannten drehfesten Verbindung erfindungsgemäß am Umfang der Öffnung im Blech mindestens eine radiale Aussparung, bevorzugt aber mehrere radiale Aussparungen, vorgesehen und an einem der beiden Bördel, jeweils nur in einer der mindestens einen radialen Aussparung bzw. der mehreren radialen Aussparungen entsprechenden Lage jeweils eine axial in Richtung zum anderen Bördel hin gerichtete Einprägung angebracht, in deren Bereich das Material dieses Bördels zumindest teilweise in die zugeordnete radiale Aussparung eingedrückt ist.

Für die Übertragung ganz besonders großer Drehmomente ist es von Vorteil, wenn dabei entsprechend der Lage der Aussparungen am Umfang der Öffnung im Blech nicht nur an einem Bördel, sondern an beiden Bördeln, jeweils jeder radialen Aussparung zugeordnet, eine solche Einprägung vorgesehen ist.

Bei der erfindungsgemäßen Verbindung wird zwischen dem Rohr und dem Blech im Bereich der Aussparungen durch das in die Aussparungen zumindest teilweise einfließende Rohrmaterial aus dem Bördel ein hervorragend wirksamer Formschluß erreicht, der die Übertragung relativ hoher Drehmomente gestattet. Zudem kann eine erfindungsgemäße Verbindung über die Gestaltung der Aussparungen bzw. der Einprägungen, insbesondere jeweils über die Form, Anzahl und Größe derselben, die Qualität der Verbindungseigenschaften und die Größe des übertragbaren Drehmomentes gesteuert bzw. verändert werden, so daß die erfindungsgemäße Verbindung bei ihrer Herstellung auch an unterschiedliche Anforderungen individuell unschwer angepaßt werden kann. Dabei können unterschiedliche Werkstoffe und Werkstoffpaarungen zum Einsatz kommen, wobei das Fließverhalten des Rohrwerkstoffes kein beschränkender Faktor für die Verbindung mehr ist.

Die Erfindung wird nachfolgend anhand der Zeichnung im Prinzip beispielshalber noch näher erläutert. Es zeigen:
- Fig. 1: eine perspektivische Darstellung eines Blechteiles und eines mit diesem zu verbindenden Rohres, jedoch im noch nicht zusammengefügten Zustand;
- Fig. 2: die Teile aus Fig. 1, aber im zusammengesetzten und erfindungsgemäß verbundenen Zustand, in einer perspektivischen Draufsicht von vorne (schräg von oben);
- Fig. 3: eine Seitenansicht (in Pfeilrichtung A aus Fig. 2) der Verbindung gemäß Fig. 2;
- Fig. 4: ein Mittenschnitt der Darstellung auf Fig. 3, und
- Fig. 5a bis 5g: Beispiele für unterschiedliche Ausführungsformen radialer Aussparungen an der Öffnung im Blech.

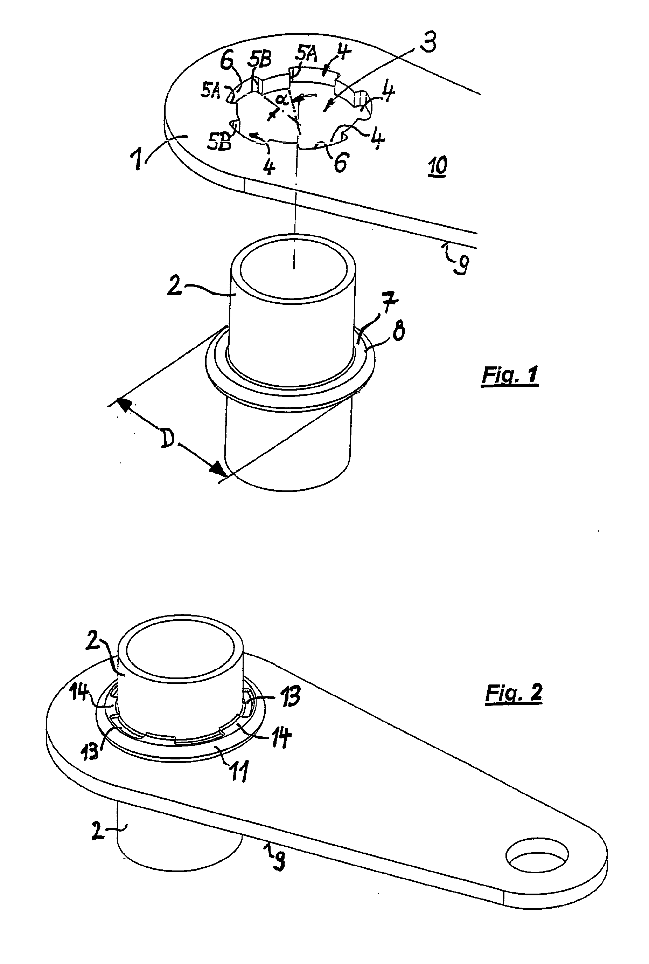

In Fig. 1 ist ein Blech 1 in Form eines länglichen Hebels gezeigt, jedoch nur ein vorderer Abschnitt desselben, der den Bereich der Verbindung mit einem Rohr 2 zugeordnet ist. In dem Blech 1 ist eine kreisförmige Öffnung 3 ausgebildet, an deren Außenumfang radial nach außen überstehende Aussparungen 4 ausgebildet sind.

Im gezeigten Ausführungsbeispiel ist jede Aussparung 4, in der Draufsicht von oben, im wesentlichen in Form eines Abschnitts aus einem Kreisring ausgebildet und wird, in Umfangsrichtung, an sie seitlich begrenzenden Seitenflächen 5A und 5B, die radial verlaufen und, radial außen, von einer äußeren, kreisabschnittförmig verlaufenden Begrenzungsfläche 6 festgelegt. Form und Größe aller Aussparungen 4 sind bei dem gezeigten Ausführungsbeispiel gleich.

Betrachtet man jeweils zwei in Umfangsrichtung nebeneinander liegende Aussparungen 4, so sind deren einander zugewandte Seitenflächen 5A und 5B dort, wo sie vom Umfang der Öffnung 3 radial nach außen ablaufen, in Umfangsrichtung um einen Winkelabstand α zueinander versetzt. Bei dem gezeigten Ausführungsbeispiel ist dieser Winkelabstand α zwischen allen gezeigten Aussparungen 4 stets gleich groß und beträgt bevorzugt mindestens 10°. Es besteht jedoch ohne weiteres auch die Möglichkeit, hier unterschiedlich große Winkelabstände α zwischen jeweils zwei Aussparungen 4 vorzusehen. Gleichfalls wäre es ohne weiteres möglich, die verschiedenen Aussparungen 4 von unterschiedlicher Größe und/oder Form auszubilden, wobei sich insbesondere auch ihre radial äußeren Begrenzungswände 6 über zueinander unterschiedlich große Bogenlängen hinweg erstrecken können.

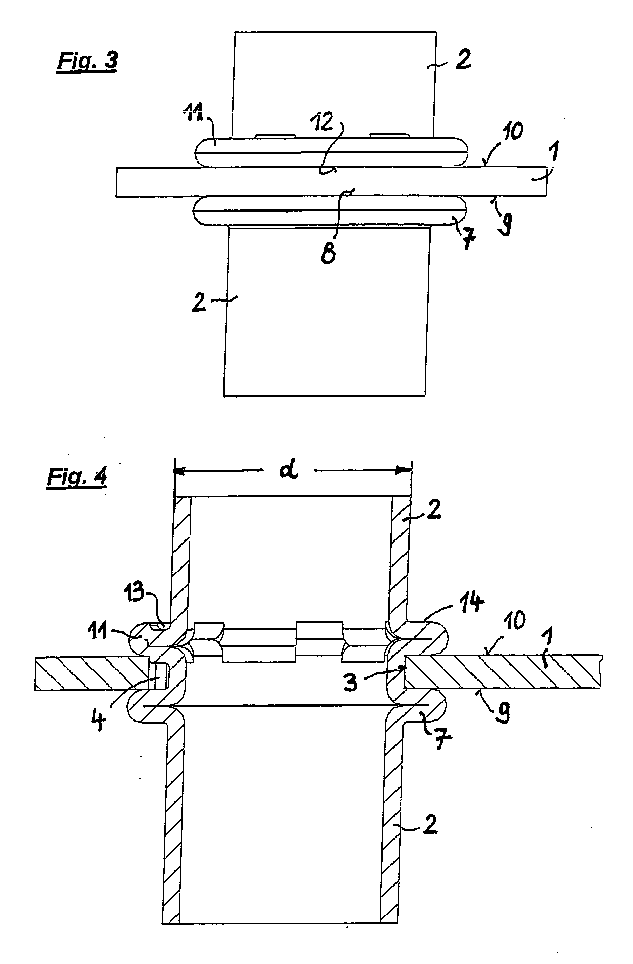

Der Innendurchmesser der Öffnung 3 (also der Durchmesser ohne Berücksichtigung der Aussparungen 4) ist etwas größer als der Außendurchmesser d des Rohres 2 (vgl. Fig. 4), aber kleiner als der Außendurchmesser D des Stützbördels 7, so daß das Rohr 2 durch die Öffnung 3 mit Spiel durchgesteckt werden kann.

Am Rohr 2 ist, wie Fig. 1 zeigt, an einer bestimmten axialen Stelle einstückig ein umlaufender Stützbördel 7 angeformt.

Der Stützbördel 7 liegt, wie z. B. die Darstellung der Fig. 3 (Seitenansicht der Verbindung) zeigt, mit seiner oberen Umlaufkante 8 gegen die Unterseite 9 des Bleches 1 im montierten Zustand der Verbindung an.

Auf der Oberseite 10 des Bleches 1 ist, wie aus den Fig. 2 und 3 gut ersichtlich ist, am Rohr 2 ein Verschlußbördel 11 einstückig angeformt, der auf seiner dem Blech 1 zugewandten unteren Umlaufkante 12 gegen die Oberseite 10 des Bleches 1 anliegt.

Wie z. B. die Fig. 3 und 4 zeigen, wird das Blech 1 zwischen den beiden Bördeln 7 und 11 neben dem noch weiter unten zu beschreibenden Formschluß zusätzlich auch noch durch Reibschluß, der an den beiden Oberflächen 9, 10 des Bleches 1 zwischen dieser und der zugewandten Umlaufkante 8 bzw. 12 der Bördel 7 bzw. 11 wirkt, gehalten.

Die Darstellung der Fig. 4 zeigt einen Diagonalschnitt in der zur Zeichenebene parallelen Mittelebene der Verbindung aus Fig. 3.

In der Schnittdarstellung der Fig. 4 ist, auf der linken Seite, eine Aussparung 4 am Umfang der Öffnung 3 im Blech 1 gezeigt.

An dem in Fig. 4 oben liegenden Verschlußbördel 11 ist, genau entsprechend der Lage, Größe und Form der Aussparung 4, eine Einprägung 13 angebracht, und zwar von der in Fig. 4 oben liegenden Seite des Verschlußbördels 11 axial in Richtung auf den gegenüberliegenden Stützbördel 7 hin. Infolge dieser Einprägung 13 wird auf der Unterseite des Verschlußbördels 11 im Bereich der Aussparung 4 Rohrmaterial aus dem Verschlußbördel 11 in die Öffnung der Aussparung 4 (in Fig. 4: von oben her) eingedrückt, d. h. beim Prägevorgang zur Ausbildung der Einprägung 13 fließt auf der Unterseite des Verschlußbördels 11 Material von diesem von oben her in die Aussparung 4 hinein.

Zwischen den am Umfang angeordneten Einsprägungen 13, deren jede der Lage, Form und Größe der im Blech 1 zugeordneten Aussparung 4 entspricht, sind am Verschlußbördel 11 Zwischenbereiche 14 angeordnet, die nicht mit einer Einprägung versehen sind und sich genau entlang der Umfangsbereiche des weiteren Stützbördels 11 erstrecken, unter denen keine Aussparungen 4 im Blech vorgesehen sind.

Bei der Schnittdarstellung der Fig. 4 verläuft der Schnitt auf der rechts dargestellten Seite durch einen solchen Zwischenbereich 14 ohne Einprägung im darüber verlaufenden Verschlußbördel 11. In diesen Bereichen 14 wirkt somit auch kein Druck in axialer Richtung zwischen dem Verschlußbördel 11 und der ihm zugewandten Oberfläche 10 des Bleches 1.

In einer in den Figuren nicht dargestellten weiteren Ausführungsform besteht auch noch die Möglichkeit, bei der gezeigten Verbindung auch noch am Stützbördel 7 (ebenso wie am Verschlußbördel 11) entsprechend Lage, Größe und Form der Aussparungen 4 ebenfalls Einprägungen entsprechend den Einprägungen 13 auf der gegenüberliegenden Seite vorzunehmen, mit der Folge, daß dann in jede Aussparung 4 an deren beiden axialen Endbereichen jeweils Material aus dem entsprechenden Bördel 7 bzw. 11 eintritt und damit ein Formschluß zwischen dem Rohr 2 und dem Blech 1 an beiden axialen Endbereichen der Aussparungen 4 geschaffen wird, was die Drehmomentfestigkeit der Verbindung deutlich erhöht.

Je nach Größe der Bördel 7 bzw. 11 und der Tiefe der jeweils angebrachten Einprägung 13 wandert das Material des betreffenden Bördels mehr oder weniger tief (in axialer Richtung) in die jeweils zugeordnete Aussparung 4 hinein.

Aus der Darstellung der Fig. 2, die eine zusammengebaute erfindungsgemäße Vorrichtung in perspektivischer Darstellung zeigt, sind die Anordnung der Einprägungen 13 am oben liegenden Verschlußbördel 11 und die nebeneinander liegende Einprägungen trennenden Zwischenbereiche 14 ohne Einprägung gut erkennbar.

Das Blech 1 ist bei der fertigen Verbindung somit zwischen dem Stützbördel 7 und dem Verschlußbördel 11 axial fixiert.

Die Schnittdarstellung der Verbindung, wie sie aus Fig. 4 ersichtlich ist, läßt auf der linken Seite den Formschluß zwischen der Einprägung 13 und der Aussparung 4 erkennen, während rechts in Fig. 4 ersichtlich ist, wie das Blech 1 von oben vom Verschlußbördel 11 und von unten vom Stützbördel 7 umgriffen wird.

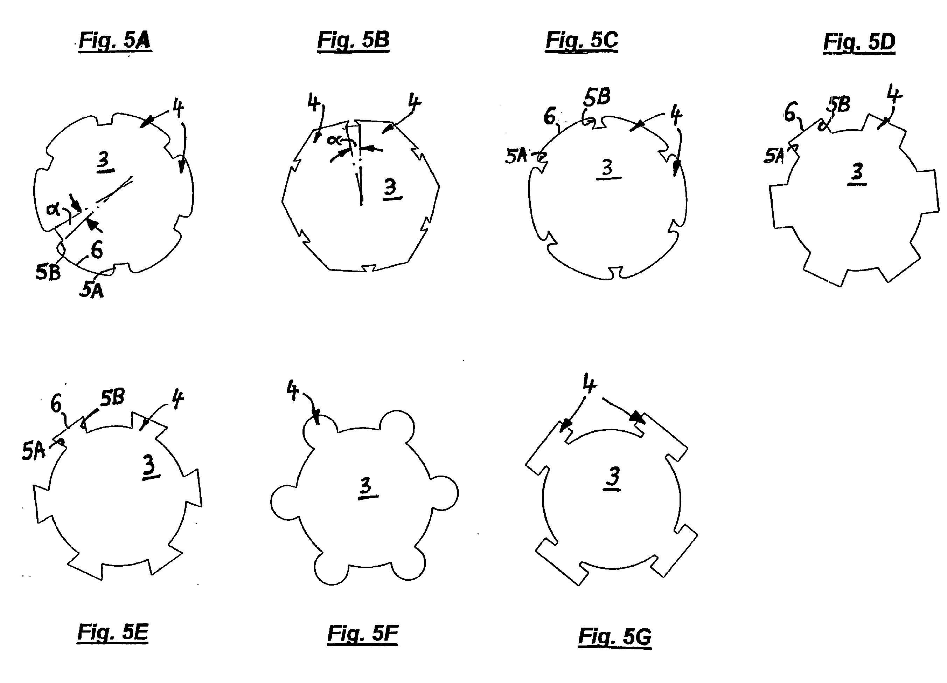

Die Darstellungen der Figuren 5A bis 5G zeigen, in ganz prinzipieller Form, verschiedene Möglichkeiten zur Ausbildung der Form der radialen Aussparungen 4 am Umfang der Öffnung 3 im Blech 1, wobei auf die in den Figuren speziell gezeigten Ausbildungen der einzelnen Formen der Aussparungen 4 ausdrücklich als wesentlich verwiesen wird:
Die Form der Aussparungen 4 gemäß Fig. 5A entspricht der Form der Aussparungen 4, wie sie bei dem Ausführungsbeispiel gemäß den Fig. 1 bis 4 dargestellt und eingesetzt sind.

Bei der Form der Aussparungen 4, wie sie in Fig. 5B zu sehen sind, handelt es sich um eine solche, die in ihrem (jeweils relativ zum Mittelpunkt der Öffnung 3 gesehen) anfänglichen Bereich radial divergierende Seitenflächenbereiche 5A, 5B aufweist, die von ihren Enden aus wieder dreieckförmig zusammenlaufen. Auf die Darstellung der Fig. 5B wird speziell verwiesen.

Die Ausbildung der Aussparungen 4 gemäß Fig. 5C ist eine Variante der Form aus Fig. 5A, bei der hier jedoch die radial seitlich begrenzenden Flächen 5A und 5B in Form von radial überstehenden Bögen gebildet werden. Auch hier wird auf die Darstellung der Fig. 5C ausdrücklich verwiesen.

Die Formen für die Aussparungen 4 gemäß Fig. 5D ragen im Querschnitt rechteckig von der Öffnung 3 aus radial vor, wobei die seitlichen Begrenzungsflächen 5A und 5B jeder Aussparung 4 parallel zueinander verlaufen.

Die Form der Aussparungen 4 gemäß Fig. 5E ist schwalbenschwanzförmig radial vorstehend, die der Fig. 5F demgegenüber kreisabschnittförmig und die aus Fig. 5G ist prinzipiell hammerförmig (mit beidseitig vorragendem Hammerkopf).

Es versteht sich von selbst, daß auch ganz andere als die in den Fig. 5A bis 5G gezeigten Formen und Größen sowie Anordnungen für die einzelnen Aussparungen 4 eingesetzt werden können, wobei die gezeigten Formen nur bevorzugte Ausführungsformen darstellen.

Zur Herstellung der in den Figuren dargestellten Verbindung wird zuerst der Stützbördel 7 am Rohr 2 angeformt.

Anschließend wird das Blech 1 mit der Bohrung 3 versehen und zusätzlich die Aussparungen 4 angebracht. Anzahl, Größe und Form der Aussparungen 4 können entsprechend den Forderungen an die Verbindung frei gestaltet werden, wobei besonders bevorzugte Ausgestaltungen aus den Figuren 5A bis 5G entnehmbar sind.

Anschließend wird das Blech 1 auf das Rohr 2 aufgesetzt, letzteres durch die Öffnung 3 des Bleches 1 hindurchgeschoben und dann der Verschlußbördel 11 einstückig angeformt, etwa durch einen geeigneten Stauchvorgang am Rohr 2.

Im letzten Schritt werden schließlich die Einprägungen 7 im Tiefziehverfahren hergestellt. Dabei fließt der Rohrwerkstoff in die Aussparungen 4 des Blechs 1 ganz oder teilweise ein und bildet den gewünschten Formschluß aus, der das Verdrehen von Blech 1 und Rohr 2 wirksam verhindert.

## Patentansprüche

1. Verfahren zum drehfesten Verbinden eines metallischen Rohres (2) mit einem Blech (1), mit folgenden Verfahrensschritten:
a) einstückiges Anformen eines umlaufenden Stützbördels (7) am Rohr (2);
b) Ausbilden einer Öffnung (3) im Blech (1) zum Durchstecken des Rohres (2), wobei diese Öffnung (3) größer als der Rohrdurchmesser (d) und kleiner als der Durchmesser (D) des Stützbördels (7) ist;
c) Anbringen mindestens einer radialen Aussparung (4) im Blech (1) am Umfang der Öffnung (3);
d) Einschieben des Rohres (2) in die Öffnung (3) bis zum Anliegen des Stützbördels (7) gegen die Oberfläche (9) der ihm zugewandten Blechseite;
e) Anformen eines umlaufenden Verschlußbördels (11) einstückig am Rohr (2) auf der dem Stützbördel (7) gegenüberliegenden Seite des Bleches (1) derart, daß dieser Verschlußbördel (11) an der Oberfläche (10) der ihm zugewandten Blechseite anliegt;
f) Nur an den Stellen, an denen eine radiale Aussparung (14) im Blech (1) am Umfang der Öffnung (3) vorgesehen ist, Einbringen jeweils einer axial gerichteten Einprägung (13) an einem der beiden Bördel (7, 11) entsprechend der Lage und Form dieser radialen Aussparung (4) unter gleichzeitigem Einfließen von Rohrwerkstoff zumindest teilweise in diese Aussparung (4).

2. Verfahren nach Anspruch 1, bei dem mehrere radiale Aussparungen (4) längs des Umfangs der Öffnung (3) angebracht werden, wobei der Winkelabstand (α) zwischen den beiden einander zugewandten Seitenflächen (5A, 5B) zweier benachbarter Aussparungen (4) an den Stellen, an denen sie vom Umfang der Öffnung (3) ablaufen, mindestens 10° beträgt.

3. Verfahren nach Anspruch 2, bei dem vier bis sechs radiale Aussparungen (4) angebracht werden.

4. Verfahren nach Anspruch 2 oder 3, bei dem die radialen Aussparungen (4) gleichmäßig am Umfang der Öffnung (3) verteilt angebracht werden.

5. Verfahren nach einem der Ansprüche 1 bis 4, bei dem alle radialen Aussparungen (4) in gleicher Form und Größe ausgebildet werden.

6. Verfahren nach einem der Ansprüche 1 bis 5, bei dem die Einprägungen (13) mittels Tiefziehen hergestellt werden.

7. Verfahren nach einem der Ansprüche 1 bis 6, bei dem die jede radiale Aussparung (4) in Umfangsrichtung seitlich begrenzenden Seitenflächen (5A, 5B) radial verlaufen.

8. Verfahren nach einem der Ansprüche 1 bis 7, bei dem der Verfahrensschritt f) an beiden Bördeln (7, 11) ausgeführt wird.

9. Drehfeste Verbindung eines metallischen Rohres (2) mit einem Blech (1), wobei das Rohr (2) durch eine Öffnung (3) im Blech (1) hindurchläuft und mit einem einstückig an ihm angeformten, umlaufenden Stützbördel (7) gegen die Oberfläche (9) einer Seite des Bleches (1) sowie mit einem einstückig an ihm angeformten, umlaufenden Verschlußbördel (11) gegen die Oberfläche (10) der gegenüberliegenden Seite des Bleches (1) anliegt, und wobei ferner am Umfang der Öffnung (3) im Blech (1) mindestens eine radiale Aussparung (4) vorgesehen und, deren Lage entsprechend, an einem der beiden Bördel (7, 11) eine axial in Richtung zum anderen Bördel (7, 11) hin gerichtete Einprägung (13) angebracht ist, in deren Bereich das Material dieses Bördels (7, 11) zumindest teilweise in die radiale Aussparung (4) eingedrückt ist.

10. Drehfeste Verbindung nach Anspruch 9, bei der mehrere radiale Aussparungen (4) längs des Umfangs der Öffnung (3) vorgesehen sind und jeder derselben an einem der Bördel (7, 11) eine Einprägung (13) zugeordnet ist.

11. Drehfeste Verbindung nach Anspruch 9 oder 10, bei dem, entsprechend der Lage aller Aussparungen (4) am Umfang der Öffnung (3) im Blech (1), an beiden Bördeln (7, 11), jeweils jeder radialen Aussparung (4) zugeordnet, eine Einprägung (13) vorgesehen ist.
